# EUROPEAN PATENT APPLICATION

(11) **EP 4 851 780 A1**
(43) Date of publication of application: **09.12.2026**
(21) Application number: 25305833.3
(22) Date of filing: 08.06.2025
(51) Int. Cl.: G06F 7/58, H04L 9/32

(54) **GENERATING A CERTIFICATE SIGNING REQUEST BASED ON QUANTUM GENERATED RANDOM NUMBERS**

(71) Applicant: OVH, 59100 Roubaix (FR)
(72) Inventor: MARCHAND, Guillaume, 59110 La Madeleine (FR)
(74) Representative: BCF Global

(57) **Abstract**

The present disclosure relates to a computer-implemented method for generating a certificate signing request. A plurality of random numbers generated using a quantum random number generator are received. A transaction identification number associated with the plurality of random numbers is received. A public and private key pair is generated based on the plurality of random numbers. The certificate signing request is generated using the public and private key pair. The certificate signing request is sent to a certificate authority. A digital identity certificate is received. The digital identity certificate and an indication that the digital identity certificate is associated with the transaction identification number are stored.

## Description

### TECHNICAL FIELD

The present technology relates to a computer-implemented method for securing information exchanged over a computer network and more specifically to a computer-implemented method for generating a certificate signing request based on quantum generated random numbers.

### BACKGROUND

In the digital age, the secure exchange of information over networks is paramount. Transport layer security (TLS) has become the *de facto* standard for securing communications on the internet, providing confidentiality, integrity, and authentication between clients and servers. TLS is widely used in web browsing, email, instant messaging, and voice-over-IP (VoIP), among other applications. The security of TLS relies heavily on the strength and integrity of the cryptographic keys used during the handshake process.

A critical component in establishing a secure TLS connection is the certificate signing request (CSR). A CSR is a message sent from an applicant to a certificate authority (CA) to apply for a digital identity certificate. It contains the public key that will be included in the digital identity certificate, along with identifying information such as the organization name and domain. The CSR is signed with the applicant's private key, proving ownership of the corresponding public key.

The strength of the cryptographic keys embedded in a CSR is foundational to the overall security of the TLS protocol. These keys must be generated using high-quality randomness to ensure they are unpredictable and resistant to attacks. Weak or predictable keys can be exploited by adversaries, undermining the security of the entire communication channel.

However, generating truly random numbers in computing environments is inherently challenging. Most systems rely on pseudo-random number generators (PRNGs), which, while sufficient for many applications, can be vulnerable to prediction or manipulation if not properly seeded or implemented. This vulnerability poses a significant risk in cryptographic contexts, where the predictability of key material can lead to breaches.

Based on these considerations, there is a clear need for mechanisms that not only generate strong random numbers but also provide assurance to the user that the randomness used in key generation is genuine and uncompromised.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

### SUMMARY

It is an object of the present technology to ameliorate at least some of the inconveniences present in the prior art.

In some aspects, the techniques described herein relate to a computer-implemented method for generating a certificate signing request, the method including: receiving a plurality of random numbers generated using a quantum random number generator; receiving a transaction identification number associated with the plurality of random numbers; generating, based on the plurality of random numbers, a public and private key pair; generating the certificate signing request using the public and private key pair; sending the certificate signing request to a certificate authority; receiving, in response to the certificate signing request, a digital identity certificate; and storing the digital identity certificate and an indication that the digital identity certificate is associated with the transaction identification number.

In some embodiments, the method further comprises: transmitting, to a quantum random number storage system, the transaction identification number; and receiving, from the quantum random number storage system, a state that the quantum random number generator was in while generating the plurality of random numbers.

In some embodiments, receiving the plurality of random numbers includes: receiving one or more byte sequences generated using the quantum random number generator; and converting the one or more byte sequences to the plurality of random numbers.

In some embodiments, converting the one or more byte sequences to the plurality of random numbers includes generating the plurality of random numbers using a pseudo-random number generator initialized with the one or more byte sequences.

In some embodiments, the method further includes diluting the one or more byte sequences using a random tree process to generate additional byte sequences.

In some embodiments, the method further includes requesting the one or more byte sequences from a quantum random number storage system.

In some embodiments, the request for the one or more byte sequences indicates a quantity and format for the one or more byte sequences.

In some embodiments, the method further includes storing the one or more byte sequences and an indication that the one or more byte sequences are associated with the transaction identification number.

In some embodiments, generating the public and private key pair includes generating the public and private key pair using an asymmetric public and private key encryption process.

In some embodiments, the asymmetric public and private key encryption process is an RSA encryption process.

In some embodiments, the asymmetric public and private key encryption process is an elliptic curve cryptography (ECC).

In some embodiments, the quantum random number generator includes a quantum computing device with one or more qubits.

In some embodiments, the quantum random number generator includes a quantum computing device with at least two qubits.

In some aspects, the techniques described herein relate to a system for generating the certificate signing request, the system including at least one processor and memory including executable instructions, which, when executed by the at least one processor, cause the system to perform the method.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

It must be noted that, as used in this specification and the appended claims, the singular form "a", "an" and "the" include plural referents unless the context clearly dictates otherwise.

As used herein, the term "and/or" is to be taken as specific disclosure of each of the two specified features or components with or without the other. For example "A and/or B" is to be taken as specific disclosure of each of (i) A, (ii) B and (iii) A and B, just as if each is set out individually herein.

As used herein, "at least one of A and B" is to be taken as specific disclosure of each of (i) A, (ii) B and (iii) A and B, just as if each is set out individually herein.

Embodiments of the present technology each have at least one of the above-mentioned aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects, and advantages of embodiments of the present technology will become apparent from the following description, the accompanying drawings, and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a diagram of an example computing environment in accordance with various embodiments of the present technology;
Figure 2 is a diagram of a system for generating a certificate signing request in accordance with various embodiments of the present technology; and
Figures 3 and 4 are a flow diagram of a method for generating a certificate signing request based on quantum generated random numbers in accordance with various embodiments of the present technology.

It should be noted that, unless otherwise explicitly specified herein, the drawings are not to scale.

### DETAILED DESCRIPTION

The generation of high-quality random numbers is a foundational requirement in cryptographic systems, yet it remains a significant challenge in classical computing environments. Traditional methods typically rely on pseudo-random number generators (PRNGs), which, although adequate for many general-purpose applications, can be susceptible to prediction or manipulation if not carefully implemented or seeded. In cryptographic contexts, such vulnerabilities can compromise the unpredictability of key material, leading to severe security breaches.

Quantum random number generators (QRNGs) may be used to generate random numbers. QRNGs leverage the inherent unpredictability of quantum phenomena, such as photon behavior or quantum vacuum fluctuations, to produce truly random numbers. Integrating QRNGs into the key generation process for CSRs can significantly enhance the entropy and/or security of the resulting cryptographic keys, thereby strengthening the foundation of TLS-based communications.

Describe herein are methods and/or systems that use random numbers generated by QRNGs for cryptographic key creation. These methods and/or systems may allow a user to verify that the randomness employed is genuine and/or uncompromised.

Throughout this description, terms such as "bits," "bytes," and "random numbers" are used interchangeably. A bit is typically the smallest unit of data, a byte typically consists of eight bits. A random number may be a numerical value represented by one or more bits and/or bytes. A person skilled in the art will understand how to convert between these representations as needed. For example, a sequence of random bits can be grouped into bytes, which can then be interpreted as random numbers according to a specified format or encoding.

The present disclosure is not limited in its application to the details of construction and the arrangement of components set forth in the following description or illustrated in the drawings. The disclosure is capable of other embodiments and of being practiced or of being carried out in various ways. Also, the phraseology and terminology used herein is for the purpose of description and should not be regarded as limiting. The use of "including", "comprising", or "having", "containing", "involving" and variations thereof herein, is meant to encompass the items listed thereafter as well as, optionally, additional items. In the following description, the same numerical references refer to similar elements.

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and/or implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some implementations of the present technology, the processor may be a general-purpose processor, such as a central processing unit (CPU) or a processor dedicated to a specific purpose, such as a digital signal processor (DSP) or quantum processing unit (QPU). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof.

In the context of the present specification, unless expressly provided otherwise, a computer system may refer, but is not limited to, an "electronic device," an "operation system," a "system," a "computer-based system," a "controller unit," a "monitoring device," a "control device," and/or any combination thereof appropriate to the relevant task at hand.

In the context of the present specification, unless expressly provided otherwise, the expression "computer-readable medium" and "memory" are intended to include media of any nature and kind whatsoever, non-limiting examples of which include RAM, ROM, disks (CD-ROMs, DVDs, floppy disks, hard disk drives, etc.), USB keys, flash memory cards, solid state-drives, and tape drives. Still in the context of the present specification, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present specification, unless expressly provided otherwise, the words "first," "second," "third," etc. have been used as adjectives only for the purpose of allowing for distinction between the nouns that they modify from one another, and not for the purpose of describing any particular relationship between those nouns.

With these fundamentals in place, we will now consider some non-limiting examples of the present technology.

### COMPUTING ENVIRONMENT

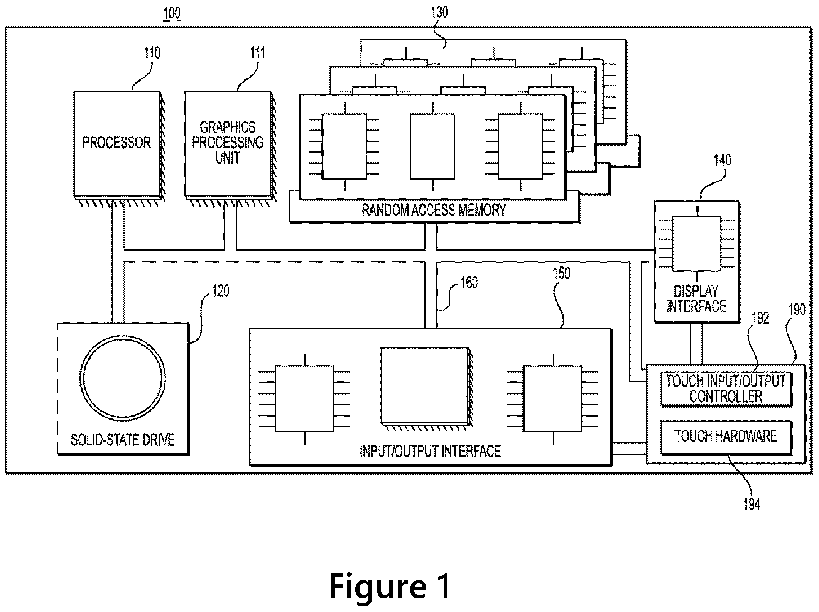

Figure 1 illustrates a computing environment 100, which may be used to implement and/or execute any of the methods described herein. In some embodiments, the computing environment 100 may be implemented by any of a conventional personal computer, a network device, and/or an electronic device (such as, but not limited to, a mobile device, a tablet device, a server, a controller unit, a control device, etc.), and/or any combination thereof appropriate to the relevant task at hand.

In some embodiments, the computing environment 100 comprises various hardware components including one or more single or multi-core processors collectively represented by processor 110, a solid-state drive 120, a random access memory 130, and an input/output interface 150. The computing environment 100 may be a computer specifically designed to operate a machine learning algorithm (MLA). The computing environment 100 may be a generic computer system.

In some embodiments, the computing environment 100 may also be a subsystem of one of the above-listed systems. In some other embodiments, the computing environment 100 may be an "off-the-shelf" generic computer system. In some embodiments, the computing environment 100 may also be distributed amongst multiple systems. The computing environment 100 may also be specifically dedicated to the implementation of the present technology. As a person in the art of the present technology may appreciate, multiple variations as to how the computing environment 100 is implemented may be envisioned without departing from the scope of the present technology.

Those skilled in the art will appreciate that processor 110 is generally representative of a processing capability. In some embodiments, in place of or in addition to one or more conventional Central Processing Units (CPUs), one or more specialized processing cores may be provided. For example, one or more Graphic Processing Units 111 (GPUs), Quantum Processing Units (QPUs), Tensor Processing Units (TPUs), and/or other so-called accelerated processors (or processing accelerators) may be provided in addition to or in place of one or more CPUs.

System memory will typically include random access memory 130, but is more generally intended to encompass any type of non-transitory system memory such as static random access memory (SRAM), dynamic random access memory (DRAM), synchronous DRAM (SDRAM), read-only memory (ROM), or a combination thereof. Solid-state drive 120 is shown as an example of a mass storage device, but more generally such mass storage may comprise any type of non-transitory storage device configured to store data, programs, and other information, and to make the data, programs, and other information accessible via a system bus 160. For example, mass storage may comprise one or more of a solid state drive, hard disk drive, a magnetic disk drive, and/or an optical disk drive.

Communication between the various components of the computing environment 100 may be enabled by a system bus 160 comprising one or more internal and/or external buses (e.g., a PCI bus, universal serial bus, IEEE 1394 "Firewire" bus, SCSI bus, Serial-ATA bus, ARINC bus, etc.), to which the various hardware components are electronically coupled.

The input/output interface 150 may enable networking capabilities such as wired or wireless network communications. As an example, the input/output interface 150 may comprise a networking interface such as, but not limited to, a network port, a network socket, a network interface controller and the like. Multiple examples of how the networking interface may be implemented will become apparent to the person skilled in the art of the present technology. For example the networking interface may implement specific physical layer and data link layer standards such as Ethernet, Fibre Channel, Wi-Fi, Token Ring or Serial communication protocols. The specific physical layer and the data link layer may provide a base for a full network protocol stack, allowing communication among small groups of computers on the same local area network (LAN) and large-scale network communications through routable protocols, such as Internet Protocol (IP).

The input/output interface 150 may be coupled to a touchscreen 190 and/or to the system bus 160. The touchscreen 190 may be part of the display. In some embodiments, the touchscreen 190 is the display. The touchscreen 190 may equally be referred to as a screen 190. In the embodiments illustrated in Figure 1, the touchscreen 190 comprises touch hardware 194 (e.g., pressure-sensitive cells embedded in a layer of a display allowing detection of a physical interaction between a user and the display) and a touch input/output controller 192 allowing communication with the display interface 140 and/or the system bus 160. In some embodiments, the input/output interface 150 may be connected to a keyboard (not shown), a mouse (not shown) or a trackpad (not shown) allowing the user to interact with the computing environment 100 in addition to or instead of the touchscreen 190.

According to some implementations of the present technology, the solid-state drive 120 stores program instructions suitable for being loaded into the random access memory 130 and executed by the processor 110 for executing acts of one or more methods described herein. For example, at least some of the program instructions may be part of a library or an application.

The computing environment 100 may include any number of the illustrated components, which may be integrated in any number of physical devices. The computing environment 100 may be implemented as a cloud environment and/or a distributed architecture. The computing environment 100 may include multiple servers, which may be in different physical locations and/or on different networks. The computing environment 100 may include virtualized systems. The methods described herein, or any parts of the methods described herein, may be executed on multiple systems as distributed applications.

### QUANTUM COMPUTING

Quantum computing can be used to solve complex problems and gain new information. While classical computers rely on classical physical properties to perform calculations, such as the ability of a transistor to represent '0' or '1', quantum computing operates on a quantum scale to exploit a computational advantage.

Quantum computing is a method that takes advantage of quantum effects, such as superposition of basis states and entanglement to perform certain computations more efficiently than a classical digital computer. In contrast to a digital computer, which stores and manipulates information in the form of bits (e.g., a '1' or '0'), quantum computing systems can manipulate information using qubits. A qubit can refer to a quantum device that enables the superposition of multiple states (e.g., data in both the '0' and '1' state) and/or to the superposition of data, itself, in the multiple states. In accordance with conventional terminology, the superposition of a '0' and '1' state in a quantum system may be represented, e.g., as α | 0> + β | 1>. The '0' and '1' states of a digital computer are analogous to the | 0> and | 1> basis states, respectively of a qubit. The value | α | <2> represents the probability that a qubit is in | 0> state, whereas the value | β | <2> represents the probability that a qubit is in the | 1> basis state.

Quantum bits, also called qubits, are created by manipulating and measuring quantum particles, such as photons, electrons, trapped ions and atoms. Superconducting qubits are obtained from superconducting materials that operate at extremely low temperatures, these qubits may be favored for their fast computational speed and precise control. Quantum Dots are small semiconductors that capture a single electron and use it as a qubit, offering promising potential for scalability and compatibility with existing semiconductor technology.

Photons are individual particles of light capable of sending quantum information over long distances via fiber optic cables and are currently used in quantum communication and quantum cryptography. Trapped ions and atoms can also be used as qubits with long coherence times and high-fidelity measurements. To manipulate these particles, the qubits may be kept at extremely low temperatures to minimize potential interferences and avoid inaccurate results or errors caused by unintentional decoherence. Quantum algorithms, such as variational algorithms for optimization, Shor's algorithm for factoring large numbers, and Grover's algorithm for searching through unsorted lists, can reduce the computational complexity of some problems.

### SUPERPOSITION

A qubit, taken in isolation, is not particularly useful. However, it can place the quantum information it contains in a state of superposition, which represents a combination of all possible configurations of the qubit. Superimposed groups of qubits can generate complex, multidimensional computational spaces. These spaces make it possible to represent complex problems. This superposition gives quantum computers their intrinsic parallelism, allowing them to simultaneously process many classical inputs in a single superimposed quantum state.

### THE QUANTUM SYSTEM

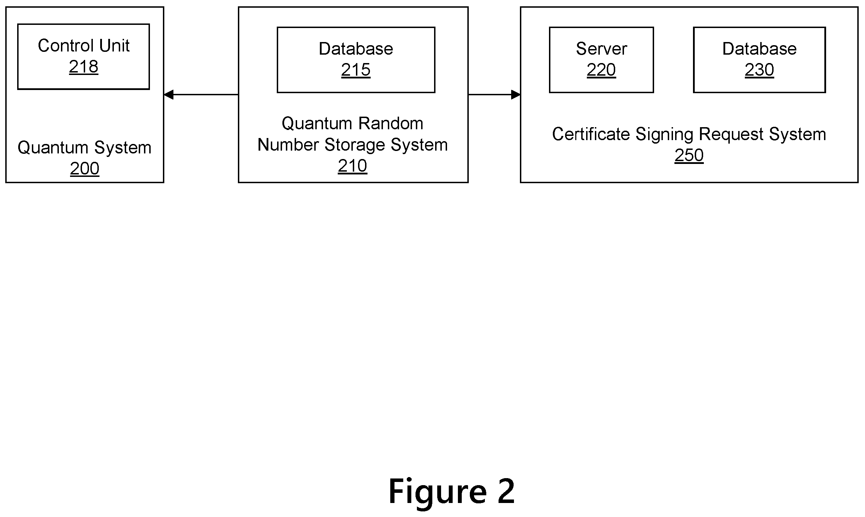

Figure 2 is a diagram of a system for generating a certificate signing request in accordance with various embodiments of the present technology. A quantum random number storage system 210 may store random numbers. The quantum random number storage system 210 may include and/or be in communication with a quantum system 200 that is configured to generate random byte sequences. Various types of quantum computing devices, using different technologies to provide qubits, can be used to generate random byte sequences. The quantum system 200 may be any suitable type of quantum computing device and/or may include multiple different types of quantum computing devices.

The quantum system 200 may be used as an entropy source. The quantum system 200 may have any number of qubits, such as one qubit or two qubits. The quantum system 200 may include a photonic subsystem. The quantum system 200 can include any type of qubit source system.

The quantum system 200 may comprise a control unit 218. The control unit 218 may control the photonic subsystem. The control unit 218 may control a laser of the photonic subsystem. The control unit 218 may serve as a hub for principal components. The control unit 218 may be a server. The control unit 218 may provide a visual interface. The visual interface may allow an operator to design linear optical circuits, simulate single photon sources, and/or manage complex quantum circuits. The control unit 218 may include a database and/or any other data structure for storing data. The database may be used to store task results and/or system logs.

The photonic subsystem of the quantum system 200 may include a laser source. The laser source may be a pulsed laser operating at a frequency of approximately 80 MHz. Each pulse may deliver energy in the range of 1 to 100 joules, with a typical value between 10 and 13 joules. The laser may be powered by a 230V distribution unit. The laser may be employed to optically excite a quantum dot. The excitation process may initiate quantum phenomena that are inherently unpredictable and suitable for high-entropy random number generation. The excitation process may be used to generate the random byte sequences.

The photonic subsystem may comprise a shaping device for adjusting the shape of the laser beam. The shaping device may transform a Gaussian beam into a flat profile for applications requiring uniform irradiance distribution, essential for precise cutting or optical processing. The shaping device may be a QShaper provided by Quandela.

The photonic subsystem may comprise a light guide, such as an optical fiber, to guide light along a single path through its core. Using a light guide may reduce modal dispersion and/or provide fast and reliable data transmission in the quantum system.

The photonic subsystem may comprise a demultiplexer to direct the excitation laser, collect single photons, and/or passively split these photons into two separate paths in order to manipulate two qubits. The photonic subsystem may act as a photonic router. The photonic subsystem may be electronically controlled to distribute photons across the various processing channels.

The quantum system 200 may comprise a Photonic Integrated Circuit (PIC). The PIC may translate a quantum algorithm, which may have been written with the visual interface, into physical operations on photons. The PIC may integrate components such as beam splitters and/or Mach-Zehnder interferometers. The PIC may be used to create quantum gates, such as the CNOT gate to quantum programming. The PIC may be Quandela's Ascella PIC.

The photonic subsystem may comprise a photon source. The photon source may be Quandela's eDelight device. The photon source may produce single, indistinguishable photons on demand. An indium arsenide/gallium arsenide (InAs/GaAs) quantum dot contained within a chip may emit a photon via photoluminescence after excitation. The chip may be installed in a low-vibration cryogenic chamber, such as a cryostat. Generated photons may be transmitted via an integrated optical fiber. The integrated optical fiber may handle optical excitation and/or photon collection through light polarization.

The quantum system 200 can comprise a QRNG to generate random numbers. The photonic subsystem detailed above may be used as the QRNG. Unlike classical random number generators, which use deterministic algorithms to produce seemingly random numbers, the QRNG exploits the inherent randomness of quantum processes to generate random numbers.

The QRNG may generate random numbers based on a single photon hitting a balanced beam splitter and determining whether the photon was reflected or transmitted by the beam splitter. Each photon may correspond to a random bit. If the photon was reflected a '1' may be output as the random bit, and if the photon was transmitted a '0'n may be output as the random bit (or vice-versa). There may be an equal probability that the single photon is reflected or transmitted by the beam splitter.

The quantum system 200 may comprise a device that certifies the randomness of the quantum bytes generated by the quantum system 200. The certification can be performed by checking that the quantum bytes generated by the system are independent of each other. The independence of the bytes may be determined by analyzing whether certain bytes that were generated by the quantum system 200 can be used to determine information about other bytes that have been generated by the quantum system 200. The certification may determine whether there is a uniform distribution of bits having '0' and '1' states. If there is a uniform distribution of '0' and '1' bits this may indicate that there was the same probability that a '0' or '1' would be generated.

The photonic subsystem of the quantum system 200 may comprise a solid-state emitter and a glass photonic chip configured to generate the Qbits and entangle the generated Qbits.

The certifying device can implement any methods for determining randomness of the quantum bytes, such as the methods found in ISO/IEC 19790 and/or ISO/IEC 15408.

The quantum random number storage system 210 may include some or all components of the computing environment 100. The quantum random number system 210 may include a database 215.

A certificate signing request system 250 may request random numbers from the quantum random number storage system 210 and/or from the quantum system 200. The certificate signing request system 250 may comprise a server 220 and/or a database 230. The server 220 of the certificate signing request system 250 may request the random bytes from the quantum random number storage system 210 and/or the certificate signing request system 250 may request the random bytes directly from the quantum system 200.

The server 220 may receive the random bytes generated by the quantum system 200. A transaction identification number may be received with the random bytes. The transaction identification number may be a job identification number. The transaction identification number may be associated with the random bytes. The received random bytes may be stored in a database 230 of the certificate signing request system 250. The server 220 may generate a certificate signing request using the random bytes. The server 220 may transmit the certificate signing request to a certificate authority, and receive, in response to the request, a digital identity certificate. The certificate signing request and/or the digital identity certificate may be stored in the database 230.

The transaction identification number may be transmitted to the quantum system 200 and/or the quantum random number storage system 210. In response, the quantum system 200 and/or quantum random number storage system 210 may transmit a record of the state that the QRNG was in while generating the random numbers associated with the transaction identification number. This state information may include a Clauser-Horne-Shimony-Holt (CHSH) value, a minimal entropy value, a job identification number, and/or other information related to the state of the QRNG.

Providing information about the state of the QRNG at the time of random number generation may provide transparency and verifiability in cryptographic systems. This may enable users to trace the origin and quality of the entropy used in key generation, offering assurance that the randomness was produced under expected and uncompromised conditions.

### METHOD FOR GENERATING RANDOM NUMBERS

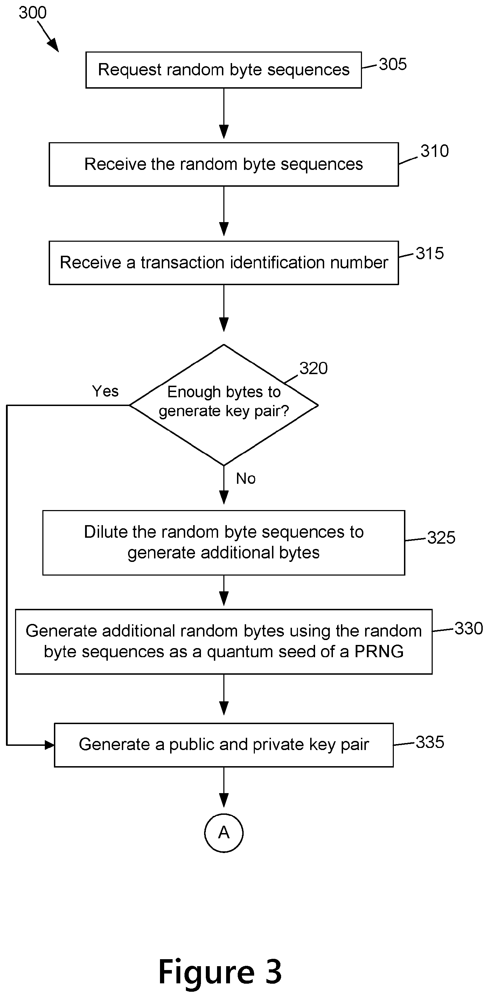

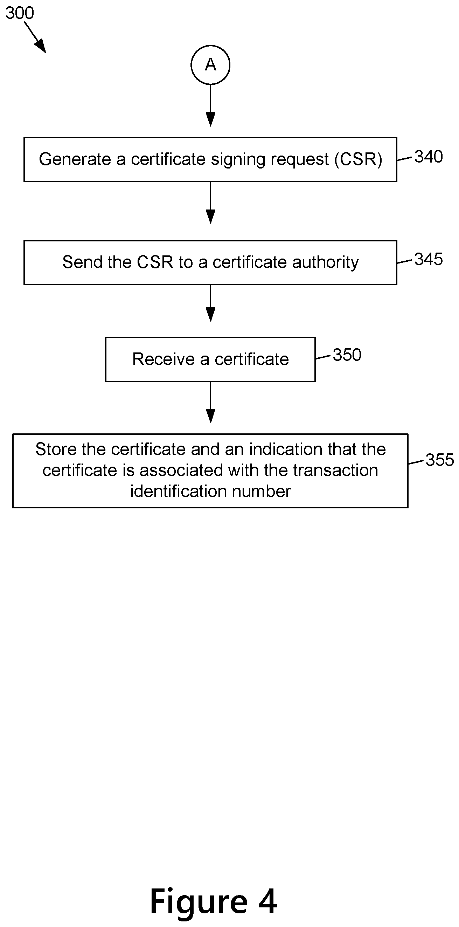

Figures 3 and 4 are flow diagram of a method 300 for generating a certificate signing request based on quantum generated random numbers in accordance with various embodiments of the present technology. In one or more aspects, the method 300 or one or more steps thereof may be performed by a computing system, such as the computing environment 100. The method 300 or one or more steps thereof may be embodied in computer-executable instructions that are stored in a computer-readable medium, such as a non-transitory mass storage device, loaded into memory and executed by a CPU. The method 300 is exemplary, and it should be understood that some steps or portions of steps in the flow diagram may be omitted and/or changed in order.

At step 305, one or more random byte sequences may be requested. A request for random byte sequences may be sent to a QRNG or to a system containing the QRNG, such as the quantum system 200. The request for the random byte sequences may be sent to a system in communication with the QRNG, such as the quantum random number storage system 210. The request may be transmitted via an application programming interface (API). The API may be provided by the certificate signing request system 250.

The request for the random byte sequences may specify the desired quantity and/or the format of the requested byte sequences. The quantity in the request may indicate a minimum quantity of random bytes that is being requested.

At step 310, random byte sequences may be received. The random byte sequences may be received from the quantum system 200 and/or from the quantum random number storage system 210. The random byte sequences may be received via an API.

At step 315, a transaction identification number associated with the random byte sequences may be received. This transaction identification number may serve to uniquely link the random numbers to a specific request or session, enabling traceability and verification. Although described as separate steps, the random byte sequences and the transaction identification number may be received concurrently.

At step 320 a determination may be made as to whether the received number of bytes is sufficient for generating a cryptographic key pair. If enough bytes were received at step 310 to generate a key pair, then the method 300 may continue at step 335. Otherwise, if the process for generating the key pair uses more bytes than the amount of bytes received at step 310, then the method 300 may proceed to step 325 in order to generate additional bytes.

At step 325, the random byte sequences may be diluted to generate additional bytes. The dilution may be performed using any suitable dilution process that receives an amount of random bytes as input and outputs an even larger amount of diluted random bytes. An amount of bytes that can be used for generating a key pair may be output by the dilution process.

Dilution of the quantum seed may be performed using a random tree process. The random tree may be implemented as a hierarchical arrangement of computational nodes, where each node applies a transformation function, such as a hash, XOR operation, or bitwise permutation, to its input. The input to the root node is the one or more byte sequences, and each subsequent node receives the output of its parent node, optionally combined with additional entropy sources or internal state variables. This tree-based processing introduces additional layers of randomness and statistical smoothing, helping to mitigate any potential bias or structure in one or more byte sequences.

At step 330, additional random bytes may be generated using the random byte sequences. A pseudo-random number generator may be initialized using the random byte sequences as a quantum seed. The pseudo-random number generator may output the additional random bytes. An amount of bytes that can be used for generating a key pair may be output by the pseudo-random number generator. Any suitable random number generator algorithm may be used. The quantum seed may be input to the pseudo-random number generator.

Additional bytes may be generated by diluting the random byte sequences at step 325, using the random byte sequences as a quantum seed at step 330, and/or using any other method for generating additional bytes. Any suitable technique can be used to convert the random byte sequences into an amount of bytes that can be used for generating a key pair.

At step 335, a public and private key pair may be generated. The public and private key pair may be generated using the random byte sequences received at step 310 or using the random bytes output at step 330. The key pair may be generated using an asymmetric encryption algorithm. The asymmetric key generation process may, for example, utilize RSA (Rivest-Shamir-Adleman) or Elliptic Curve Cryptography (ECC). The choice of the process depends on the desired security level, performance characteristics, and application requirements. These cryptographic schemes rely on the mathematical difficulty of certain problems, such as integer factorization or elliptic curve discrete logarithms, to ensure the security of the generated keys.

In some embodiments, the use of elliptic curves is advantageous as it allows for the handling of shorter keys. With RSA, a key of at least 2048 bits is required to guarantee a satisfactory level of security. With ECDSA, a 256-bit elliptic curve is considered satisfactory. Signature generation with ECDSA is therefore faster, but the length of ECDSA signatures is also shorter (at least four times shorter). Verification time remains equivalent or slightly faster with RSA. In some embodiments, the ECC process is a ECC-32 or ECC-57.

At step 340, a certificate signing request (CSR) may be generated using the public and private key pair. The CSR may include the public key along with identifying information about the entity requesting the certificate. The CSR may be digitally signed using the corresponding private key. Signing the CSR may allow for verification of the authenticity of the request and may enable a certificate authority to verify the identity of the requester before issuing a digital certificate.

At step 345, the certificate signing request may be sent to a certificate authority. The certificate authority will use the information contained in the CSR to validate the request and, if approved, issue a digital identity certificate that binds the public key to the identity of the requester. The digital identity certificate may be a transport layer security (TLS) certificate, previously known as secure sockets layer (SSL) certificate. The TLS is a digital certificate associated with a domain name or URL. TLS certificates may be used to establish a link between a website and its owner (company, merchant, or individual). Website authentication secures electronic communications with users who connect to it via the Internet.

The TLS certificate may be used to establish trust by authenticating the website and encrypting all information (personal, banking, etc.) between the website and the user connecting to it. The TLS certificate can be considered as an electronic passport for a given website and may contains the following information: the URL of the website to be certified, the company's contact information, the public key which enables information encryption, the name of the Certification Authority that issues the electronic passport, the expiration date of the SSL certificate, and/or the signature of the Certification Authority.

At step 350, the digital identity certificate may be received from the certificate authority in response to the certificate signing request.

At step 355, the digital identity certificate, along with an indication that the digital identity certificate is associated with the transaction identification number received at step 315, may be stored. The digital identity certificate may be stored in a database, such as the database 230. The association between the digital identity certificate and the transaction identification number may enable traceability and verification of the certificate's origin, and may ensure that the certificate can be reliably linked back to the specific quantum-generated random numbers.

While some of the above-described implementations may have been described and shown with reference to particular acts performed in a particular order, it will be understood that these acts may be combined, sub-divided, or re-ordered without departing from the teachings of the present technology. At least some of the acts may be executed in parallel or in series. Accordingly, the order and grouping of the act is not a limitation of the present technology.

It should be expressly understood that not all technical effects mentioned herein need be enjoyed in each and every embodiment of the present technology.

As used herein, the wording "and/or" is intended to represent an inclusive- or; for example, "X and/or Y" is intended to mean X or Y or both. As a further example, "X, Y, and/or Z" is intended to mean X or Y or Z or any combination thereof.

The foregoing description is intended to be exemplary rather than limiting. Modifications and improvements to the above-described implementations of the present technology may be apparent to those skilled in the art.

## Claims

1. A computer-implemented method for generating a certificate signing request, the method comprising:
receiving a plurality of random numbers generated using a quantum random number generator;
receiving a transaction identification number associated with the plurality of random numbers;
generating, based on the plurality of random numbers, a public and private key pair;
generating the certificate signing request using the public and private key pair;
sending the certificate signing request to a certificate authority;
receiving, in response to the certificate signing request, a digital identity certificate; and
storing the digital identity certificate and an indication that the digital identity certificate is associated with the transaction identification number.

2. The computer-implemented method of claim 1, further comprising:
transmitting, to a quantum random number storage system, the transaction identification number; and
receiving, from the quantum random number storage system, a state that the quantum random number generator was in while generating the plurality of random numbers.

3. The computer-implemented method of claim 1 or claim 2, wherein receiving the plurality of random numbers comprises:
requesting one or more byte sequences generated using the quantum random number generator;
receiving the one or more byte sequences; and
converting the one or more byte sequences to the plurality of random numbers.

4. The computer-implemented method of claim 3, wherein converting the one or more byte sequences to the plurality of random numbers comprises generating the plurality of random numbers using a pseudo-random number generator initialized with the one or more byte sequences.

5. The computer-implemented method of claim 3, wherein converting the one or more byte sequences to the plurality of random numbers further comprises diluting the one or more byte sequences using a random tree process.

6. The computer-implemented method of claim 3, further comprising requesting the one or more byte sequences from a quantum random number storage system.

7. The computer-implemented method of claim 6, wherein the request for the one or more byte sequences indicates a quantity and format for the one or more byte sequences.

8. The computer-implemented method of claim 3, further comprising storing the one or more byte sequences and an indication that the one or more byte sequences are associated with the transaction identification number.

9. The computer-implemented method of any one of claims 1 to 8, wherein generating the public and private key pair comprises generating the public and private key pair using an asymmetric public and private key encryption process.

10. The computer-implemented method of claim 9, wherein the asymmetric public and private key encryption process is an RSA encryption process.

11. The computer-implemented method of claim 9, wherein the asymmetric public and private key encryption process is an elliptic curve cryptography (ECC).

12. The computer-implemented method of any one of claims 1 to 11, wherein the quantum random number generator comprises a quantum computing device with one or more qubits.

13. The computer-implemented method of any one of claims 1 to 12, wherein the quantum random number generator comprises a quantum computing device with at least two qubits.

14. A non-transitory computer readable medium comprising instructions which upon being executed by at least one processor cause execution of the method according to any one of claims 1 to 13.

15. A system comprising at least one processor and at least one memory device comprising instructions which, upon being executed by the at least one processor, cause execution of the method according to any one of claims 1 to 13.
